## Europäisches Patentamt
## European Patent Office
## Office européen des brevets

(11) Veröffentlichungsnummer: **0 112 326**
**B1**

(12) # EUROPÄISCHE PATENTSCHRIFT

(45) Veröffentlichungstag der Patentschrift:
14.01.87

(51) Int. Cl.⁴: **B 29 C 47/40**

(21) Anmeldenummer: **83890230.2**

(22) Anmeldetag: **20.12.83**

(54) Schneckenstrangpresse.

(30) Priorität: 21.12.82 AT 4625/82

(43) Veröffentlichungstag der Anmeldung:
27.06.84 Patentblatt 84/26

(45) Bekanntmachung des Hinweises auf die Patenterteilung:
14.01.87 Patentblatt 87/3

(84) Benannte Vertragsstaaten:
AT BE CH DE FR GB IT LI LU NL SE

(56) Entgegenhaltungen:
AT-B-356 882
DE-C-828 483
DE-C-883 338
DE-C-2 446 420
US-A-2 466 934
US-A-4 408 888

(73) Patentinhaber: **Cincinnati Milacron Austria Aktiengesellschaft, Laxenburgerstrasse 246, A-1232 Wien (AT)**

(72) Erfinder: **Stricker, Dieter, Franz Asenbauergasse 20, A-1238 Wien (AT)**
Erfinder: **Zelinka, Wilhelm, Anningerstrasse 32/3/4, A-2340 Mödling (AT)**

(74) Vertreter: **Gibler, Ferdinand, Dipl.Ing.Dr.tech., Dorotheergasse 7/14, A-1010 Wien (AT)**

EP 0 112 326 B1

LIBER, STOCKHOLM 1987

## Beschreibung

Die Erfindung betrifft eine Schneckenstrangpresse zum Verarbeiten von Kunststoffen mit wenigstens zwei ineinander greifenden Schnecken mit gegenläufigem Drehsinn, deren Außendurchmesser mit deren Kerndurchmesser vom einzugseitigen zum ausstoßseitigen Ende hin verjüngt sind.

Eine derartige Schneckenstrangpresse ist gemäß der DE-PS 2 446 420 bekannt, wobei bei den in kämmenden Eingriff stehenden gegenläufigen Schnecken sich die Relation zwischen überdeckung der Schneckengänge und örtlichem Schneckenaußendurchmesser weder in Schneckenlängs- noch in Schneckenumfangsrichtung ändert.

Es ist aber auch gemäß der AT-P8 356 882 bekannt, zwei ineinander greifende, kegelige Schnecken mit gegenläufiger Drehrichtung so auszubilden, daß über die ganze Schneckenlänge die Gangtiefe mit 50 bis 75% der in Richtung zum einzugsseitigen Ende hin erfolgenden Schneckendurchmesservergrößerung zunimmt.

Die Aufgabe der vorliegenden Erfindung liegt nun darin, eine Schneckenstrangpresse der eingangs beschriebenen Art mit Doppelschnecken zu schaffen, mit denen eine optimale Anpassung an das Plastizierverhalten des zu verarbeitbaren Kunststoffes durchführbar ist.

Dies wird dadurch erreicht, daß jede Schnecke wenigstens zwei jeweils einen unterschiedlichen Konuswinkel aufweisende kegelstumpfförmige Abschnitte aufweist, in denen jeweils sowohl der Außendurchmesser als auch der Kerndurchmeser konisch verjüngt ausgebildet ist. Damit kann der Eigenschaft des Kunststoffes bezüglich seiner spezifischen raschen Volumenabnahme in der Kompressionszone verstärkt Rechnung getragen werden, indem im einzugsseitigen Teil der Schnecke eine starke Verjüngung vorgesehen ist. Um jedoch eine weitere Verdichtung der bereits ihre höchste Dichte aufweisenden Schmelze in der Ausstoßzone und damit eine unnötige Friktion und einen Anstieg der Massetemperatur zuverlässig auszuschließen, weist der im ausstoßseitigen Endbereich gelegene kegelstumpfförmige Abschnitt eine geringere Verjüngung bzw. einen kleineren Konuswinkel auf.

Eine weitere Ausgestaltung der Erfindung besteht darin, daß drei kegelstumpfförmige Abschnitte mit jeweils unterschiedlichem Konuswinkel pro Schnecke vorgesehen sind, wobei der Konuswinkel größer ist als der Achswinkel. Mit einer derartigen "dreistufigen" Schnecke ist eine noch gezieltere Anpassung an das Plastifizierverhalten des zu verarbeitenden Kunststoffes möglich.

Eine andere, bevorzugte Ausführungsvariante der Erfindung ist dadurch gekennzeichnet, daß der vordere, im Bereich des ausstoßseitigen Endes gelegene kegelstumpfförmige Abschnitt eine konstante Schneckengangtiefe aufweist, wobei der Konuswinkel gleich jenem Achswinkel ist, der von der Schneckenachse und der Längssymmetrieebene der Doppelschnecken eingeschlossen wird. Mit dieser speziellen Ausbildung der Änderung sowohl des Konuswinkels über die gesamte Schneckenlänge als auch der Änderung der Schneckengangtiefe wird eine gleichmäßigere Energiezu- oder -abführung, ein geringerer Schergeschwindigkeitsunterschied sowie eine verbesserte Stoffhomogenität bei geringeren Temperaturunterschieden von der äußeren zurinneren Materialschicht erzielt. Diese Vorteile resultieren aus dem gleichbleibenden Schneckenvolumen der Ausstoßzone und einer damit verbundenen Reduzierung der Friktion.

Ein für die Praxis vorteilhafter Bereich des Konuswinkels der beiden kegelstumpfförmigen Abschnitte ist dann gegeben, wenn der Konuswinkel etwa das 1 5 bis 5-fache des Achswinkels beträgt, der von der Schneckenachse und der Längssymmetrieebene der Doppelschnecken eingeschlossen wird.

Im Folgenden wird die Erfindung in der Zeichnung an Hand zweier Ausführungsbeiepiele näher beschrieben.

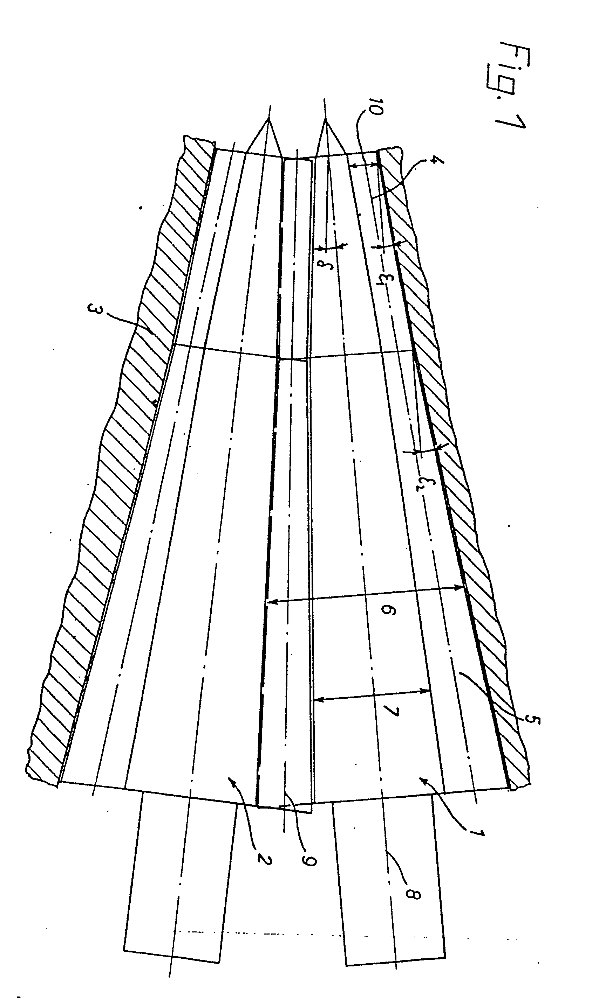

Es zeigen: Fig. 1 eine schematisch dargestellte zweifach konische Doppelschnecke und

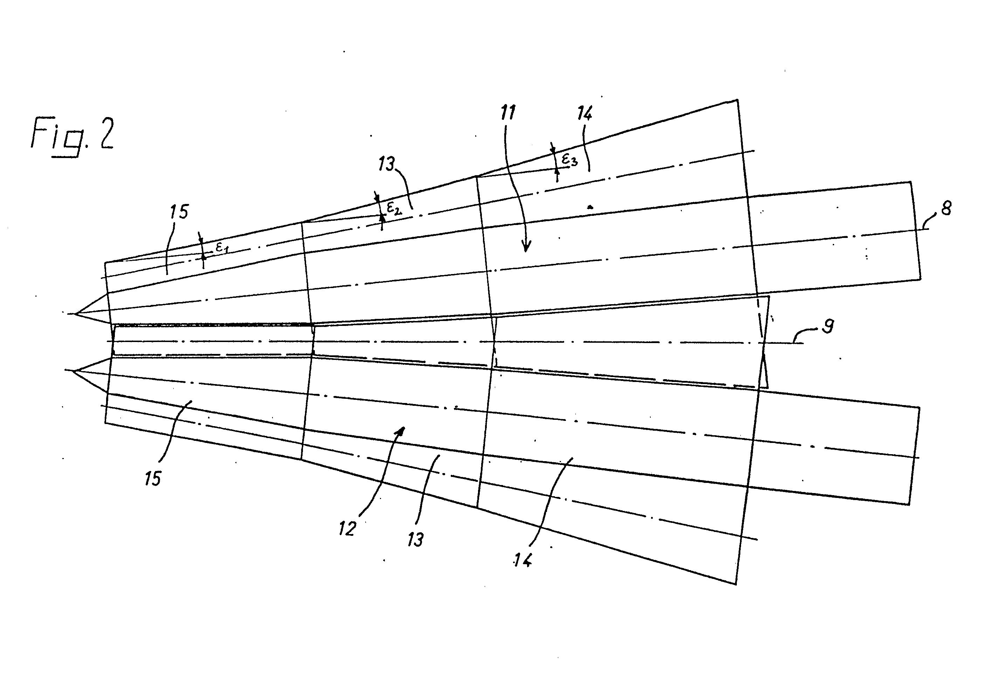

Fig. 2 eine schematisch dargestellte dreifach konische Doppelschnecke.

Eine erfindungsgemäß ausgebildete Schneckenstrangpresse besteht im wesentlichen aus zwei konischen, ineinandergreifenden, sich gegenläufig drehenden Förderschnecken 1, 2, die in einem beheizten Gehäuse bzw. Zylinder 3 gelagert sind. Sowohl dieser als auch die beiden Schnecken 1, 2 sind zwischen der Eihfüllöffnung und der Austrittsöffnung in zwei kegelstumpfförmige Abschnitte 4, 5 unterteilt, wobei sich der vordere über die gesamte Ausstoßzone und der hintere Abschnitt über die Entgasungs- und Kompressionezone erstreckt. Beide Abschnitte 4, 5 weisen jeweile einen eich zum auestoßseitigen Ende hin konisch verjüngenden Außendurchmesser 6 und einen ebenso sich verjüngenden Kerndurchmeser 7 auf. Die Hüllflächen beider kegelstumpfförmiger Abschnitte 4,5 schließen mit der Schneckenachse 8 einen jeweils unterschiedlichen Konuswinkel $\varepsilon_1$, $\varepsilon_2$ ein. Der Konuswinkel $\varepsilon_2$ des kegelstumpfförmiegn Abschnittes 5 ist größer ale der Achswinkel d, die Schneckengangtiefe nimmt mit zunehmendem Kerndurchmesser zu. Im Übergangsbereich zum kleineren, ausstoßseitigen Abschnitt 4 wird schließlich jene Gangtiefe erreicht, die jener des vorderen Abschnittes 4 gleich ist.

Solange der Kunststoff noch nicht vollkommem plastifiziert ist, nimmt die Dichte des Kunststoffes infolge der Zufuhr von Heizungs- und Friktionsenergie ständig zu. Entsprechend dieser Dichtezunahme sinken der Füllgrad und somit der Wärmeübergang nach einer gewissen Länge, da Wärmeübergang nur an jenen Stellen möglich ist, die auch wirklich mit dem Kunstetoff Kontakt haben. Aus diesem Grund ist im Plastizierbereich eine rasche Volumenabnahme der Schnecken unumgänglich. Diese Volumenabnahme, in Förderrichtung gesehen, erfolgt einerseits durch Verkleinerung der Schneckensteigung und andererseits durch die Verkleinerung der Schneckengangtiefe. Je nach dem Plastizierverhalten des Kunststoffes setzt sich der Plastizierbereich von Schnecken und Zylinder aus zwei oder mehreren (Fig. 2) konischen Abschnitten zusammen.

Bei herkömmlichen konischen Schnecken nimmt in der Ausstoßzone, in Förderrichtung gesehen, die Gengtiefe ab. Dies verursacht eine Verdichtung der vollkommen plastischen Masse und führt zu Friktion und unerwünschtem Anstieg der Massetemperatur.

Die konstante Gangtiefe des vorderen kegelstumpfförmigen Abschnittes 4 der erfindungsgemäß ausgebildeten Schnecken 1,2 bringt eine gleichmäßigere Energiezu- oder -abführung, geringere Schergeschwindigkeitsunterschiede, verbesserte Stoffhomogenität und geringere Temperaturunterschiede von der äußeren zur inneren Materialschicht. In dieser Zone wird der Schmelzvorgang beendet und die Kunststoffmasse homogenisiert.

Fig. 2 zeigt mehrkonische Doppelschnecken 11, 12 , wobei der Entgasungs- und Plastifizierbereich aus zwei hintereinander gereihten kegeletumpfförmigen Abschnitten 13, 14 besteht und der Konuswinkel immer größer ist als der Achswinkel. Im vordersten der Ausstoßzone entsprechenden Bereich ist ein eine konstante Schneckengangtiefe aufweisender kegelstumpfförmiger Abschnitt 15 vorgesehen. In der Praxis beträgt der Konuswinkel φ das 1 bis etwa 5-fache des Achswinkels δ.

### Patentanprüche

1. Schneckenstrangpresse zum Verarbeiten von Kunststoffen mit wenigstens zwei ineinandergreifenden Schnecken mit gegenläufigem Drehsinn, deren Außendurchmesser und deren Kerndurchmesser vom einzugsseitigen zum ausstoßseitigen Ende hin verjüngt sind, dadurch gekennzeichnet, daß jede Schnecke (1, 2, 11, 12) wenigstens zwei jeweils einen unterschiedlichen Konuswinkel ($\varepsilon_1$, $\varepsilon_2$) aufweisenden kegelstumpfförmige Abschnitte (4, 5, 13, 14) aufweist, in denen jeweils sowohl der Außendurchmesser (6) als auch der Kerndurchmesser (7) konisch verjüngt ausgebildet ist.

2. Schneckenstrangpresse nach Anspruch 1, dadurch gekennzeichnet, daß drei kegelstumpfförmige Abschnitte (13, 14, 15) mit jeweils unterschiedlichem Konuswinkel ($\varphi_1$, $\varphi_2$, $\varepsilon_3$) pro Schnecke vorgesehen sind, wobei der Konuswinkel grö-er ist als der Achswinkel ($\delta$), der von der Schneckebachse (8) und der Längsymmetriebene (9) der Doppelschnecken (1, 2) eingeschlossen wird.

3. Schneckenstrangpresse nach Anspruch 1 oder 2, dadurch gekennzeichnet, daß der vordere, im Bereich des ausstoßseitigen Endes gelegene kegelstumpfförmige Abschnitt (4, 15) eine konstante Schneckengangtiefe aufweist, wobei der Konuswinkel ($\varepsilon_1$) gleich jenem Achswinkel ($\delta$) ist, der von der Schneckenachse (8) und der Längssymmetrieebene (9) der Doppelschnecken (1, 2) eingeschlossen wird.

4. Schneckenstrangpresse nach einem der Ansprüche 1 bis 3, dadurch gekennzeichnet, daß der Konuswinkel ($\varepsilon_2$, $\varepsilon_3$) des kegelstumpfförmigen Abschnittes (5, 13, 14) etwa das 1,5 bis 5-fache des Achswinkels ($\delta$) beträgt, der von der Schneckenachse (8) und der Längssymmetrieebene (9) der Doppelschnecken (1, 2, 11, 12) eingeschloßsen wird.

### Claims

1. A screw extruder for processing plastics materials having at least two screws that engage in one another, have opposed directions of rotation and the external diameters and core diameters of which are tapered from the input side towards the output side, characterised in that each screw (1, 2, 11, 12) has at least two portions (4, 5, 13, 14) in the form of truncated cones each having a different cone angle ($\varepsilon_1$, $\varepsilon_2$) in each of which both the external diameter (6) and the core diameter (7) are conically tapered.

2. A screw extruder according to claim 1, characterised in that three portions (13, 14, 15) in the form of truncated cones each having different cone angles ($\varepsilon_1$, $\varepsilon_2$, $\varepsilon_3$) are provided per screw, the cone angle being larger than the axis angle ($\delta$) which is enclosed by the screw axis (8) and the longitudinal plane of symmetry (9) of the double screws (1, 2).

3. A screw extruder according to claim 1 or 2, characterised in that the forward portion (4, 15) in the form of a truncated cone and located in the region of the output end has a constant screw thread depth, the cone angle ($\varepsilon_1$) being equal to that angle ($\delta$) which is enclosed by the screw axis (8) and the longitudinal plane of symmetry (9) of the double screws (1, 2).

4. A screw extruder according to one of claims 1 to 3, characterised in that the cone angle ($\varepsilon_2$, $\varepsilon_3$) of the portion (5, 13, 14) in the form of a truncated cone is approximately from 1.5 to 5 times the axis angle ($\delta$) which is enclosed by the screw axis (8) and longitudinal nlane of symmetry (9) of the double screws (1, 2).

### Revendications

1. Boudineuse pour le travail de matières plastiques, ayant au moins deux vis engrenant l'une avec l'autre et de sens de rotation opposés, dont le diamètre extérieur et le diamètre du noyau vont en diminuant en allant du côté introduction au côté éjection, caractérisée par le fait que chaque vis (1, 2, 11, 12) possède au moins deux sections tronconiques (4, 5, 13, 14) présentant respectivement des angles de cône ($\varepsilon_1$, $\varepsilon_2$) différents, et dans chacune desquelles aussi bien le diamètre extérieur (6) que le diamètre du noyau (7) vont en diminuant coniquement.

2. Boudineuse selon la revendication 1, caractérisée par le fait que sont prévues trois sections tronconiques (13, 14, 15) d'angles de cône respectifs différents ($\varepsilon_1$, $\varepsilon_2$, $\varepsilon_3$) l'angle de cone étant supérieur à l'angle ($\delta$) que fait l'axe de vis (8) avec le plan de symétrie longitudinal (9) de la double vis (1, 2).

3. Boudineuse selon la revendication 1 ou 2, caractérisée par le fait que la section tronconique (4, 15) située à l'avant, dans la zone de l'extrémité d'éjection, possède une profondeur de filet de vis constante, l'angle de cône ($\varepsilon_1$) étant égal à l'angle ($\delta$) que fait l'axe de vis (8) avec le plan de symétrie longitudinal (9) de la vis double (1, 2).

4. Boudineuse selon l'une des revendications 1 à 3, caractérisée par le fait que l'angle de cône ($\varepsilon_1$, $\varepsilon_2$) de la section tronconique (5, 13, 14) est égal à environ 1,5 à 5 fois l'angle ($\delta$) que fait l'axe de vis (8) avec le plan de symétrie longitudinal (9) de la vis double (1, 2, 11,12).

Fig. 2

0 112 326